# EUROPÄISCHE PATENTSCHRIFT

(11) **EP 2 840 282 B1**
(45) Veröffentlichungstag und Bekanntmachung des Hinweises auf die Patenterteilung: **09.08.2017**
(21) Anmeldenummer: 14172996.2
(22) Anmeldetag: 18.06.2014
(51) Int. Cl.: F16H 25/20, H02K 7/116, H02K 11/00

(54) **Aktuator umfassend Endschalter**
Actuator comprising limit switches
Actionneur comprenant des interrupteurs de fin de course

(30) Priorität: 26.06.2013 DE 102013212209
(43) Veröffentlichungstag der Anmeldung: 25.02.2015
(73) Patentinhaber: Aktiebolaget SKF, 415 50 Göteborg (SE)
(72) Erfinder: Meyer, David S., 68680 Kembs (FR); Uhri, Patrick, 4450 Sissach (CH); Waldner, Strefan, 4434 Hölstein (CH)
(74) Vertreter: Kuhstrebe, Jochen

(56) Entgegenhaltungen:
- DE-A1-102011 088 683
- DE-U1-202007 017 535
- US-A- 3 643 919

## Beschreibung

Die Erfindung betrifft einen Aktuator, umfassend ein erstes Anlageelement und ein zweites Anlageelement, wobei eine Verstellvorrichtung vorgesehen ist, um das zweite Anlageelement relativ zum ersten Anlageelement in eine translatorische Verschieberichtung zu bewegen, wobei die Verstellvorrichtung aufweist:
- ein in Verschieberichtung zwischen den beiden Anlageelementen angeordnetes Trägerelement,
- einen am oder im Trägerelement angeordneten Antriebsmotor,
- eine erste am oder im Trägerelement drehbar gelagerte Spindelmutter, die vom Antriebsmotor drehangetrieben ist,
- eine zweite am oder im Trägerelement drehbar gelagerte Spindelmutter, die vom Antriebsmotor drehangetrieben ist,
- eine erste Spindel, die mit der ersten Spindelmutter in Eingriff steht und die mit dem einen Anlageelement fest verbunden ist,
- eine zweite Spindel, die mit der zweiten Spindelmutter in Eingriff steht und die mit dem anderen Anlageelement fest verbunden ist

Ein Aktuator der gattungsgemäßen Art ist aus der DE 10 2011 088 683 A1 bekannt.

Eine Verstellvorrichtung, z. B. ein motorangetriebenes Spindel-Mutter-System, verfährt eine obere Platte relativ zu einer Grundplatte in eine translatorische Verschieberichtung. Endschalter sind im Bereich der Endpositionen der beweglichen Platte vorgesehen, um eine Abschaltung des Antriebsmotors vorzunehmen, bevor es zu einem Anschlagen der beweglichen Platte an einem anderen Bauteil kommt. Hiermit kann die vom Aktuator ausgeführte hin und her gehende Bewegung verschleißarm bewerkstelligt werden.

Die DE 20 2007 017 535 U1 offenbart einen elektromotorischen Möbel-Doppelantrieb und eine Schalteranordnung hierfür.

Nachteilig ist bei vorbekannten Lösungen, dass die Anpassung des zu fahrenden Hubs der beweglichen Platte und somit die entsprechende Anordnung der Endschalter aufwändig ist. Abhängig vom jeweiligen Hub müssen die Verkabelungen der Endschalter entsprechend modifiziert bzw. angepasst werden. Die Kabel müssen zumeist innerhalb des Aktuators verlaufen, so dass für die saubere Verlegung der Kabel ein entsprechender Aufwand zu treiben ist. Demgemäß ist die Anpassung der Lage der Endschalter bei einem gattungsgemäßen Aktuator bei dessen Produktion aufwändig und teuer.

Der Erfindung liegt die Aufgabe zugrunde, einen Aktuator der eingangs genannten Art so fortzubilden, dass eine einfachere Anpassung an einen gewünschten Hub möglich ist. Dies soll durch eine einfache Bauweise erreicht werden, so dass der Aktuator kostengünstig mit einem vorgegebenen Hub herstellbar ist.

Die Lösung dieser Aufgabe durch die Erfindung ist dadurch gekennzeichnet, dass zwei Endschalter angeordnet sind, um den translatorischen Verschiebeweg zwischen den beiden Anlageelementen zu begrenzen, wobei die beiden Endschalter in translatorischer Verschieberichtung beabstandet an einem Schalterträger angeordnet sind, wobei der Schalterträger am Trägerelement befestigt ist, wobei ein erstes Betätigungselement für einen der beiden Endschalter an einem der Anlageelemente befestigt ist und wobei ein zweites Betätigungselement für den anderen der beiden Endschalter an einer der Spindeln befestigt ist.

Das erste Anlageelement und/oder das zweite Anlageelement sind dabei bevorzugt als Platten ausgebildet.

Die beiden Spindeln sind bevorzugt als Gewindespindeln ausgebildet und weisen die gleiche Steigung auf.

Der Antriebsmotor kann über ein erstes Getriebeelement mit der ersten Spindelmutter in Drehverbindung stehen. Die zweite Spindelmutter kann über ein zweites Getriebeelement mit der ersten Spindelmutter in Drehverbindung stehen. Dabei können das erste und/oder das zweite Getriebeelement als Verzahnung, insbesondere als Stirnverzahnung, ausgebildet sein.

Der Antriebsmotor ist bevorzugt als Elektromotor ausgebildet.

Das Trägerelement ist vorzugsweise als Platte ausgebildet.

Die Endschalter stehen dabei bevorzugt mit dem Antriebsmotor in Verbindung, wobei der Antriebsmotor beim Empfangen eines Signals von einem der Endschalter abschaltet.

Wenngleich die Spindeln mit ihren Muttern bereits eine gewisse Führung der beiden Platten zueinander bewirken, ist bevorzugt vorgesehen, dass mindestens ein weiteres Führungselement vorhanden ist, das die beiden Anlageelemente relativ zueinander in translatorische Verschieberichtung führt.

Durch die vorgeschlagene Ausbildung eines gattungsgemäßen Aktuators wird erreicht, dass eine stabile, steife und dauerhaft funktionierende Konstruktion gegeben ist, die mit relativ einfachen Maßnahmen an einen gewünschten Hub anpassbar ist. Die Bewegung der beiden Platten (Anlageelemente) zueinander ist präzise.

Somit können nicht nur Bauteile eingespart werden, sondern auch die Montage kann vereinfacht werden. Demgemäß ist die Herstellung des Aktuators mit geringerem Kostenaufwand möglich.

In der Zeichnung ist ein Ausführungsbeispiel der Erfindung dargestellt. Es zeigen:
- Fig. 1: schematisch die Seitenansicht eines Aktuators, mit dem eine obere Platte relativ zu einer Grundplatte in eine translatorische Verschieberichtung bewegt werden kann, wobei die oberste Position der oberen Platte erreicht ist, und
- Fig. 2: schematisch den Aktuator gemäß Fig. 1, wobei die unterste Position der oberen Platte erreicht ist.

In den Figuren ist ein Aktuator 1 skizziert. Dieser weist ein erstes Anlageelement 2 in Form einer Grundplatte sowie ein zweites Anlageelement 3 in Form einer oberen Platte auf. Die beiden Platten 2, 3 sollen durch den Aktuator in eine translatorische Verschieberichtung T relativ zueinander bewegt werden. Sofern die Grundplatte 2 beispielsweise am Boden verankert ist, bewegt sich somit die obere Platte 3 in die Verschieberichtung T vertikal nach oben bzw. unten. Nicht dargestellt ist, dass neben den skizzierten Elementen auch noch weitere Führungselement vorhanden sind, die die obere Platte 3 relativ zur Grundplatte 2 führt und so für eine präzise Bewegung sorgt.

Dabei ist wesentlich, dass der Aktuator 1 dann, wenn die obere Platte 3 sowohl ihre oberste Position als auch ihre unterste Position erreicht, automatisch abschaltet. Um dies sicherzustellen, sind Endschalter 5 und 6 vorgesehen, die mit einer nicht dargestellten Steuerung in Verbindung stehen; die Steuerung sorgt dafür, dass ein nachfolgend beschriebener Antriebsmotor dann abgeschaltet wird, wenn die Endschalter 5, 6 entsprechende Signale senden.

Zur Bewegung der oberen Platte 3 relativ zur unteren Platte 2 ist eine Verstellvorrichtung 4 vorgesehen, die, wie nachfolgend beschrieben, in spezieller Weise ausgebildet ist. Damit ergibt sich, dass mit relativ geringem baulichen Aufwand eine Anpassung des Aktuators 1 an einen definierten Hub erfolgen kann.

Zentrales Element der Verstellvorrichtung 4 ist ein Trägerelement 7 in Form einer Trägerplatte, die zwischen den beiden Platten 2, 3 angeordnet ist. Wie noch zu sehen ist, ist die Verstellvorrichtung 4 so ausgebildet, dass sich die Trägerplatte 7 stets mittig zwischen den beiden Platten 2, 3 befindet. An der Trägerplatte 7 ist ein Antriebsmotor 8 befestigt. Weiterhin sind in der Trägerplatte 7 zwei Spindelmuttern 9 und 10 drehbar gelagert, nämlich eine erste Spindelmutter 9 und eine zweite Spindelmutter 10.

Vorliegend ist der Antriebsmotor 8 mit einem Stirnrad 18 versehen, das zusammen mit einem Stirnrad 19 ein erstes Getriebeelement 16 bildet. Das Stirnrad 19 ist am Außenumfang der ersten Spindelmutter 9 angeordnet. Demgemäß wird die erste Spindelmutter 9 drehangetrieben, wenn der Antriebsmotor 8 läuft.

Weiter kämmt das Stirnrad 19 mit einem weiteren Stirnrad 20, das am Außenumfang der zweiten Spindelmutter 10 angeordnet ist. Die beiden Stirnräder 19, 20 bilden ein zweites Getriebeelement 17.

Wie sich aus den Figuren ergibt, drehen damit die beiden Spindelmuttern 9 und 10 beim Antrieb durch den Antriebsmotor 8 gegensinnig. Die Zähnezahlen der Stirnräder 19 und 20 ist gleich groß, so dass sich die beiden Spindelmuttern 9 und 10 gleich schnell drehen. Des weiteren haben die beiden Spindelmuttern dieselbe Gewindesteigung.

Die erste Spindelmutter 9 steht mit einer ersten Gewindespindel 11 in Eingriff. Die zweite Spindelmutter 10 steht mit einer zweiten Gewindespindel 12 in Eingriff. Entsprechend haben auch die beiden Gewindespindeln 11, 12 dieselbe Steigung. Die erste Gewindespindel 11 ist mit ihrem oberen Ende mit der oberen Platte 3 fest verbunden, d. h. sie ist hier axial festgelegt und ansonsten drehfest mit der Platte 3 verbunden. Die zweite Gewindespindel 12 ist indes mit ihrem unteren Ende fest an der Grundplatte 2 befestigt.

Ferner ist an der Trägerplatte 7 ein Schalterträger 13 befestigt. Der Schalterträger 13 ist stabförmig ausgebildet und hat trägt - voneinander beabstandet angeordnet - die beiden Endschalter 5 und 6.

Schließlich ist ein erstes Betätigungselement 14 für die Betätigung des oberen Endschalter 5 an der Unterseite der oberen Platte 3 und ein zweites Betätigungselement 15 für die Betätigung des unteren Endschalters 6 an dem oberen axialen Ende der zweiten Spindel 12 angeordnet.

Wie sich aus der Zusammenschau der beiden Figuren ergibt, ist somit folgende Funktionsweise gegeben:
Durch den Antrieb der Verstellvorrichtung 4 aufgrund der Aktivierung des Antriebsmotors 8 werden die beiden Spindelmuttern 9 und 10 gegensinnig drehangetrieben; die Spindeln 11 und 12 bewegen sich relativ zu ihren Muttern 9 und 10 und aufgrund der gleich groß gewählten Gewindesteigungen in unterschiedliche Richtungen und gleich schnell von der Trägerplatte 7 weg. Damit wird die obere Platte 3 relativ zur Grundplatte 2 - je nach Drehrichtung des Antriebsmotors 8 - nach oben oder nach unten bewegt. Die Trägerplatte 7 befindet sich dabei stets äquidistant von den beiden Platten 2 und 3 entfernt.

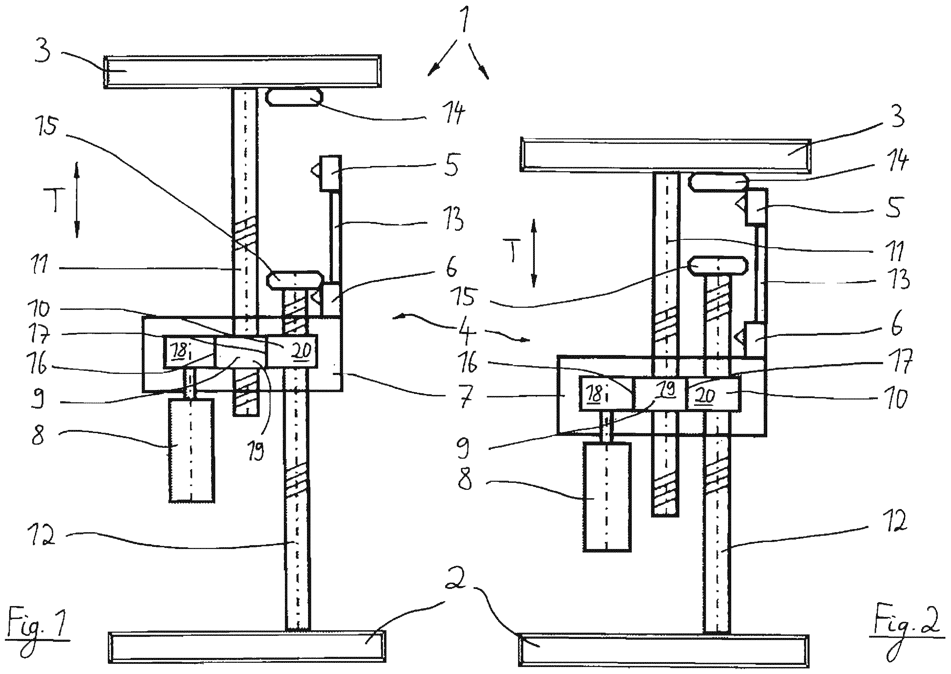

Wird die obere Patte 3 von der Verstellvorrichtung 4 nach oben bewegt, gelangt im Bereich der gewünschten oberen Endposition der oberen Platte 3 das zweite Betätigungselement 15 zum Endschalter 6, so dass dieser bei Erreichen der oberen Endlage den Antriebsmotor 8 abschaltet. Dies ist in Fig. 1 illustriert.

Wird indessen die obere Patte 3 von der Verstellvorrichtung 4 nach unten bewegt, gelangt im Bereich der gewünschten unteren Endposition der oberen Platte 3 das erste Betätigungselement 14 zum Endschalter 5, so dass dieser bei Erreichen der unteren Endlage den Antriebsmotor 8 abschaltet. Dies ist in Fig. 2 gezeigt.

Mit dieser Ausgestaltung kann in einfacher Weise eine Anpassung des Aktuators 1 an eine gewünschte Hubhöhe erreicht werden. Hierzu werden die Spindeln 11, 12 entsprechend lang ausgebildet, genauso wie der Schalterträger 13. Weitergehend müssen keine Teile an einen gewünschten Hub angepasst werden, was diesen Vorgang einfach und kostengünstig macht.

### Bezugszeichenliste

- 1: Aktuator
- 2: erstes Anlageelement (Grundplatte)
- 3: zweites Anlageelement (obere Platte)
- 4: Verstellvorrichtung
- 5: Endschalter
- 6: Endschalter
- 7: Trägerelement (Trägerplatte)
- 8: Antriebsmotor
- 9: erste Spindelmutter
- 10: zweite Spindelmutter
- 11: erste Spindel
- 12: zweite Spindel
- 13: Schalterträger
- 14: erstes Betätigungselement
- 15: zweites Betätigungselement
- 16: erstes Getriebeelement
- 17: zweites Getriebeelement
- 18: Stirnrad
- 19: Stirnrad
- 20: Stirnrad

- T: translatorische Verschieberichtung

## Patentansprüche

1. Aktuator (1), umfassend ein erstes Anlageelement (2) und ein zweites Anlageelement (3), wobei eine Verstellvorrichtung (4) vorgesehen ist, um das zweite Anlageelement (3) relativ zum ersten Anlageelement (2) in eine translatorische Verschieberichtung (T) zu bewegen, wobei die Verstellvorrichtung (4) aufweist:
- ein in Verschieberichtung (T) zwischen den beiden Anlageelementen (2, 3) angeordnetes Trägerelement (7),
- einen am oder im Trägerelement (7) angeordneten Antriebsmotor (8),
- eine erste am oder im Trägerelement (7) drehbar gelagerte Spindelmutter (9), die vom Antriebsmotor (8) drehangetrieben ist,
- eine zweite am oder im Trägerelement (7) drehbar gelagerte Spindelmutter (10), die vom Antriebsmotor (8) drehangetrieben ist,
- eine erste Spindel (11), die mit der ersten Spindelmutter (9) in Eingriff steht und die mit dem einen Anlageelement (3) fest verbunden ist,
- eine zweite Spindel (12), die mit der zweiten Spindelmutter (10) in Eingriff steht und die mit dem anderen Anlageelement (2) fest verbunden ist,
**dadurch gekennzeichnet, dass**
zwei Endschalter (5, 6) angeordnet sind, um den translatorischen Verschiebeweg zwischen den beiden Anlageelementen (2, 3) zu begrenzen,
wobei die beiden Endschalter (5, 6) in translatorischer Verschieberichtung (T) beabstandet an einem Schalterträger (13) angeordnet sind, wobei der Schalterträger (13) am Trägerelement (7) befestigt ist,
wobei ein erstes Betätigungselement (14) für einen der beiden Endschalter (5) an einem der Anlageelemente (3) befestigt ist und wobei ein zweites Betätigungselement (15) für den anderen der beiden Endschalter (6) an einer der Spindeln (12) befestigt ist.

2. Aktuator nach Anspruch 1, **dadurch gekennzeichnet, dass** das erste Anlageelement (2) und/oder das zweite Anlageelement (3) als Platten ausgebildet sind.

3. Aktuator nach Anspruch 1 oder 2, **dadurch gekennzeichnet, dass** die beiden Spindeln (11, 12) als Gewindespindeln ausgebildet sind und die gleiche Steigung aufweisen.

4. Aktuator nach einem der Ansprüche 1 bis 3, **dadurch gekennzeichnet, dass** der Antriebsmotor (8) über ein erstes Getriebeelement (16) mit der ersten Spindelmutter (9) in Drehverbindung steht.

5. Aktuator nach Anspruch 4, **dadurch gekennzeichnet, dass** die zweite Spindelmutter (10) über ein zweites Getriebeelement (17) mit der ersten Spindelmutter (9) in Drehverbindung steht.

6. Aktuator nach Anspruch 4 oder 5, **dadurch gekennzeichnet, dass** das erste und/oder das zweite Getriebeelement (16, 17) als Verzahnung, insbesondere als Stirnverzahnung, ausgebildet ist.

7. Aktuator nach einem der Ansprüche 1 bis 6, **dadurch gekennzeichnet, dass** der Antriebsmotor (8) als Elektromotor ausgebildet ist.

8. Aktuator nach einem der Ansprüche 1 bis 7, **dadurch gekennzeichnet, dass** das Trägerelement (7) als Platte ausgebildet ist.

9. Aktuator nach einem der Ansprüche 1 bis 8, **dadurch gekennzeichnet, dass** die Endschalter (5, 6) mit dem Antriebsmotor (8) in Verbindung stehen, wobei der Antriebsmotor (8) beim Empfangen eines Signals von einem der Endschalter (5, 6) abschaltet.

10. Aktuator nach einem der Ansprüche 1 bis 9, **dadurch gekennzeichnet, dass** mindestens ein Führungselement vorhanden ist, das die beiden Anlageelemente (2, 3) relativ zueinander in translatorische Verschieberichtung (T) führt.

## Claims

1. Actuator (1), comprising a first abutment element (2) and a second abutment element (3), an adjusting device (4) being provided to move the second abutment element (3) relative to the first abutment element (2) in a translational displacement direction (T), the adjusting device (4) having:
- a support element (7) arranged between the two abutment elements (2, 3) in the displacement direction (T),
- a drive motor (8) arranged on or in the support element (7),
- a first spindle nut (9), rotatably mounted on or in the support element (7) and rotationally driven by the drive motor (8),
- a second spindle nut (10), rotatably mounted on or in the support element (7) and rotationally driven by the drive motor (8),
- a first spindle (11), which is in engagement with the first spindle nut (9) and is fixedly connected to the one abutment element (3), and
- a second spindle (12), which is in engagement with the second spindle nut (10) and is fixedly connected to the other abutment element (2),
**characterized in that**
two limit switches (5, 6) are arranged so as to limit the translational displacement path between the two abutment elements (2, 3),
the two limit switches (5, 6) being arranged spaced apart in the translational displacement direction (T) on a switch support (13), the switch support (13) being attached to the support element (7), and
a first actuating element (14) for one of the two limit switches (5) being attached to one of the abutment elements (3) and a second actuating element (15) for the other of the two limit switches (6) being attached to one of the spindles (12).

2. Actuator according to Claim 1, **characterized in that** the first abutment element (2) and/or the second abutment element (3) are formed as plates.

3. Actuator according to Claim 1 or 2, **characterized in that** the two spindles (11, 12) are formed as threaded spindles and have the same thread pitch.

4. Actuator according to one of Claims 1 to 3, **characterized in that** the drive motor (8) is in rotational connection with the first spindle nut (9) via a first transmission element (16).

5. Actuator according to Claim 4, **characterized in that** the second spindle nut (10) is in rotational connection with the first spindle nut (9) via a second transmission element (17).

6. Actuator according to Claim 4 or 5, **characterized in that** the first and/or second transmission element (16, 17) is/are formed as a gear, in particular as a spur gear.

7. Actuator according to one of Claims 1 to 6, **characterized in that** the drive motor (8) is formed as an electric motor.

8. Actuator according to one of Claims 1 to 7, **characterized in that** the support element (7) is formed as a plate.

9. Actuator according to one of Claims 1 to 8, **characterized in that** the limit switches (5, 6) are in connection with the drive motor (8), the drive motor (8) switching off when it receives a signal from one of the limit switches (5, 6).

10. Actuator according to one of Claims 1 to 9, **characterized in that** there is at least one guide element, which guides the two abutment elements (2, 3) relative to each other in the translational displacement direction (T).

## Revendications

1. Actionneur (1), comprenant un premier élément de butée (2) et un deuxième élément de butée (3), dans lequel il est prévu un dispositif de réglage (4) pour déplacer le deuxième élément de butée (3) par rapport au premier élément de butée (2) dans une direction de décalage en translation (T), dans lequel le dispositif de réglage (4) comporte :
- un élément de support (7) disposé entre les deux éléments de butée (2, 3) dans la direction de décalage (T),
- un moteur d'entraînement (8) disposé sur ou dans l'élément de support (7),
- un premier écrou de broche (9) monté tournant sur ou dans l'élément de support (7), qui est entraîné en rotation par le moteur d'entraînement (8),
- un deuxième écrou de broche (10) monté tournant sur ou dans l'élément de support (7), qui est entraîné en rotation par le moteur d'entraînement,
- une première broche (11) qui est en prise avec le premier écrou de broche (9) et est fermement reliée audit élément de butée (3),
- une deuxième broche (12) qui est en prise avec le deuxième écrou de broche (10) et est fermement reliée à l'autre élément de butée (2),
deux commutateurs de fin de course (5, 6) étant agencés de manière à limiter le décalage en translation entre les deux éléments de butée (2, 3),
dans lequel les deux commutateurs de fin de course (5, 6) sont disposés de manière espacée dans la direction de décalage en translation (T) sur un support de commutateur (13), dans lequel le support de commutateur (13) est fixé à l'élément de support (7),
dans lequel un premier élément d'actionnement (14) destiné à l'un des deux commutateurs de fin de course (5) est fixé à l'un des éléments de butée (3) et dans lequel un deuxième élément d'actionnement (15) destiné à l'autre des deux commutateurs de fin de course (6) est fixé à l'une des broches (12).

2. Actionneur selon la revendication 1, **caractérisé en ce que** le premier élément de butée (2) et/ou le deuxième élément de butée (3) sont réalisés sous la forme de plaques.

3. Actionneur selon la revendication 1 ou 2, **caractérisé en ce que** les deux broches (11, 12) sont réalisées sous la forme de deux tiges filetées et **en ce qu'**elles présentent la même pente.

4. Actionneur selon l'une quelconque des revendications 1 à 3, **caractérisé en ce que** le moteur d'entraînement (8) est relié en rotation au premier écrou de broche (9) par l'intermédiaire d'un premier élément de transmission (16).

5. Actionneur selon la revendication 4, **caractérisé en ce que** le deuxième écrou de broche (10) est relié en rotation au premier écrou de broche (9) par l'intermédiaire d'un deuxième élément de transmission (17).

6. Actionneur selon la revendication 4 ou 5, **caractérisé en ce que** le premier et/ou le deuxième élément de transmission (16, 17) est/sont réalisé(s) sous la forme d'un engrènement, notamment sous la forme d'un engrènement avant.

7. Actionneur selon l'une quelconque des revendications 1 à 6, **caractérisé en ce que** le moteur d'entraînement (8) est réalisé sous la forme d'un moteur électrique.

8. Actionneur selon l'une quelconque des revendications 1 à 7, **caractérisé en ce que** l'élément de support (7) est réalisé sous la forme d'une plaque.

9. Actionneur selon l'une quelconque des revendications 1 à 8, **caractérisé en ce que** les commutateurs de fin de course (5, 6) sont reliés au moteur d'entraînement (8), dans lequel le moteur d'entraînement (8) est désactivé par le commutateur de fin de course (5, 6) lors de la réception d'un signal.

10. Actionneur selon l'une quelconque des revendications 1 à 9, **caractérisé en ce qu'**il est prévu au moins un élément de guidage qui guide les deux éléments de butée (2, 3) l'un par rapport à l'autre dans une direction de décalage en translation (T).
